# EUROPEAN PATENT APPLICATION

(11) **EP 2 325 715 A2**
(43) Date of publication of application: **25.05.2011**
(21) Application number: 10191651.8
(22) Date of filing: 18.11.2010
(51) Int. Cl.: G05D 16/10

(54) **Pressure reducing valve**

(30) Priority: 19.11.2009 JP 2009263467
(71) Applicant: JTEKT Corporation, Osaka-shi Osaka 542-8502 (JP)
(72) Inventor: Suzuki,Takuya, Osaka-shi, Osaka 542-8502 (JP); Kuroyanagi, Munetoshi, Osaka-shi, Osaka 542-8502 (JP); Suzuki, Hiroaki, Osaka-shi, Osaka 542-8502 (JP); Kubo, Toshikatsu, Osaka-shi, Osaka 542-8502 (JP)
(74) Representative: TBK

(57) **Abstract**

A pressure reducing valve (10) includes: a valve unit (18) provided between a primary port (32) and a secondary port (34); a cylinder (12) provided downstream of the valve unit (18); a piston (14) that divides a space in the cylinder (12) into a pressure reducing chamber (38) and a pressure regulation chamber (96) and that opens or closes the valve unit 18 by sliding within the cylinder (12); and a seal member (24) that is disposed in an inner peripheral face of the cylinder (12) and that includes a slidably contacting piece (26a) that slidably contacts the piston (14) due to the pressing force of an elastic member (28). The cylinder (12) is formed of a body member (20) that defines the pressure reducing chamber (38) and a cover member (22) that defines the pressure regulation chamber (96). An annular groove (94) in which the first seal member (24) is disposed is formed at the boundary between the body member (20) and the cover member (22).

## Description

### BACKGROUND OF THE INTENTION

### 1. Field of the Invention

The invention relates to a pressure reducing valve used to regulate the pressure of high-pressure gas, for example, hydrogen gas.

### 2. Description of the Related Art

In recent years, development of fuel tanks that are used in, for example, fuel cell vehicles and that can store fuel at a higher pressure (e.g., at 90 MPa) have been promoted in order to increase the storage capacity. A pressure reducing valve is used to reduce the pressure of high-pressure (primary pressure) fuel gas supplied from a fuel tank to a low pressure (secondary pressure). An example of such pressure reducing valves is a piston-type pressure reducing valve described in Japanese Patent Application Publication No. 2006-185103 (JP-A-2006-185103). In the piston-type pressure reducing valve described in JP-A-2006-I85103, a valve member is opened or closed in accordance with the movements of a piston. A seal member for securing air tightness is disposed on an outer peripheral face of the piston. In a pressure reducing valve used in, for example, a fuel cell vehicle, a seal member is exposed to fuel gas having a considerably high pressure. Therefore, in the pressure reducing valve described in JP-A-2006-185103, an annular lip seal that includes a leaf spring is used as the seal member. Therefore, sufficient air-tightness is ensured and the piston is able to slide smoothly even under high pressure.

A lip seal that includes a leaf spring has a radial elasticity lower than that of, for example, an O-ring. Therefore, in order to fit the lip seal onto an outer peripheral face of a piston, the lip seal needs to be clamped between the piston and a fixture nut as in the pressure reducing valve described in JP-A-2006-1851.03. However, in the pressure reducing valve described in JP-A-2006-185103, the lip seal and the fixture nut need to be fitted onto the piston. Therefore, the shape of the piston becomes

### SUMMARY oF THE INVENTION

It is an object of the invention to provide a pressure reducing valve with which complication of the shape of the piston is prevented, and which is easily machined and assembled.

A pressure reducing valve according to an aspect of the invention includes: an open-close valve provided between a primary port and a secondary port; a cylinder provided downstream of the open-close valve; a piston that is provided in the cylinder, that partitions a space in the cylinder into a pressure reducing chamber and a pressure regulation chamber, and that opens or closes the open-close valve by sliding within the cylinder in accordance with a difference between a force that is applied to the piston from a pressure regulation chamber side and a force that is applied to the piston from a pressure reducing chamber side; and an annular first seal member that is disposed in an inner peripheral face of the cylinder and that includes a slidably contacting piece that slidably contacts an outer peripheral face of the piston due to a pressing force of an elastic member. The cylinder is formed by connecting a body member that defines the pressure reducing chamber and a cover member that defines the pressure regulation chamber to each other. A first annular groove in which the first seal member is disposed is formed at a boundary between the body member and the cover member.

In the pressure reducing valve according to this aspect, the first seal member is disposed in the Burst annular groove that is formed at the boundary between the body member and the cover member. Therefore, in this pressure reducing valve, even if the elastic member of the first seal member has a low elasticity, there is no need to attach a fixture nut, used to fix the first seal member, to the piston, so that the shape of the piston does not become complicated.

In addition, in an existing pressure reducing valve in which a first seal member is attached to an outer peripheral face of a piston, it is necessary to perform a process of fastening the fixture nut to the piston in order to attach the first seal member to the piston. In contrast, in the pressure reducing valve according to the foregoing aspect, the first seal member can be attached just by disposing the first seal member in the first annular groove and then connecting the body member and the cover member together. Therefore, the pressure reducing valve does not require a special process for attaching the first seal member, and thus is easily assembled.

Furthermore, in the existing pressure reducing valve in which the first seal member is disposed on the outer peripheral face of the piston, the inner peripheral face of the cylinder is precision-machined to achieve a predetermined face roughness in order to allow the first seal member to smoothly slide with respect to the slidably contacting piece. In contrast, in the pressure reducing valve according to the foregoing aspect, because the slidably contacting piece of the first seal member slidably contacts the outer peripheral face of the piston, the precision-machining is performed on the outer peripheral face of the piston, which is more easily machined than the inner peripheral face of the cylinder. Therefore, in this pressure reducing valve, the precision machining for securing the sliding performance of the first seal member can be easily performed.

The pressure reducing valve according to the foregoing aspect may further include: a seal member placement portion which is formed at an opening end of the cover member that defines the pressure regulation chamber, which is larger in diameter than the pressure regulation chamber, and in which the first seal member is disposed; and a spigot protrusion portion which is formed along a circumference of an opening of the body member that defines the pressure reducing chamber, and of which an outer peripheral face contacts an inner peripheral face of the cover member which defines the seal member placement portion. The first annular groove may be formed by placing the spigot protrusion portion into the seal member placement portion.

In the foregoing pressure reducing valve, the position of the cover member relative to the body member can be easily determined by placing the spigot protrusion portion of the body member into the seal member placement portion of the cover member.

In the configuration of the pressure reducing valve according to the foregoing aspect, the first seal member may be an annular member having a U-shape in cross section, and may be disposed in the first annular groove such that an opening portion of the U-shape is oriented toward the spigot protrusion portion. A second annular groove that surrounds the first annular groove may be formed at the boundary between the cover member and the body member. A second seal member that provides hermetical sealing between the body member and the cover member may be disposed in the second annular groove.

In the foregoing pressure reducing valve, because the opening portion of the U-shape of the first seal member is oriented toward the spigot protrusion, the fluid that enters from the pressure reducing chamber into a space between the inner peripheral face of the cylinder and the piston can be introduced into the opening portion of the first seal member. When the fluid is introduced from the opening portion of the first seal member, the pressure of the fluid introduced presses the slidably contacting piece of the first seal member toward the piston. Therefore, with this pressure reducing valve, the force with which the slidably contacting piece presses the piston can be increased, so that the air-tightness provided by the first seal member can be improved. In addition, in the foregoing pressure reducing valve, the hermetical sealing between the cover member and the body member is ensured by forming the second annular groove that surrounds the first annular groove at the boundary between the cover member and the body member, and then disposing the second seal member in the second annular groove. With this an-angement, the pressure reducing valve is able to effectively prevent the fluid from flowing outside through the boundary between the body member and the cover member via the first annular groove.

The pressure reducing valve described above may further include a buffer member that is disposed at a position closer to the pressure regulation chamber than the first seal member, and that slidably contacts the inner peripheral face of the cylinder with an elastic force that is smaller than a pressing force with which the slidably contacting piece slidably contacts the outer peripheral face of the piston.

Therefore, in the foregoing pressure reducing valve, excessive energy that causes excessive movement of the piston can be absorbed by the buffer member so as to prevent rapid movement of the piston within the cylinder and effectively damp excessive vibration of the piston.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of a pressure reducing valve according to an embodiment of the invention;
FIG. 2 is a sectional view of a body member that constitutes the pressure reducing valve shown in FIG 1;
FIG. 3 is a sectional view of a cover member that constitutes the pressure reducing valve shown in FIG 1;
FIG. 4 is a sectional view of various elements of a valve unit that constitutes the pressure reducing valve shown in FIG 1; and
FIG. 5 is a sectional view of a modification of the pressure reducing valve shown in FIG. 1.

### DETAILED DESCRIPTION OF EMBODIMENTS

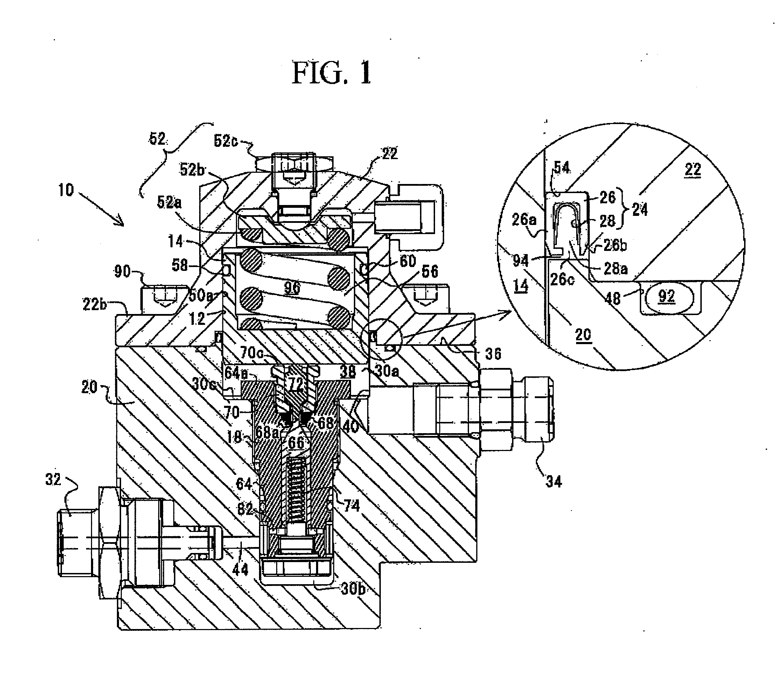

Hereafter, a pressure reducing valve according to an embodiment of the invention will be described with reference to the accompanying drawings. FTG 1 is a sectional view of a pressure reducing valve 10 according to the embodiment of the invention. The pressure reducing valve 10 is a piston-type pressure reducing valve that is mounted in a fuel cell system of, for example, a fuel cell vehicle, and that reduces the pressure of hydrogen gas having a high pressure (e.g., 90 MPa), which is supplied from a fuel tank (not shown), to a lower pressure, for example, 1.6 MPa and supplies the hydrogen gas having a lower pressure to a fuel cell stack (not shown). As shown in FIG 1, the pressure reducing valve 10 includes a cylinder 12, a piston 14 that reciprocates within the cylinder 12, an urging mechanism 52 that urges the piston 14 in one direction, and a valve unit 18 (open-close valve) that opens or closes a flow channel in the pressure reducing valve 10 in accordance with the reciprocating movements of the piston 14.

The cylinder 12 is defined by a body member 20 and a cover member 22. A seal member 24 (first seal member) is disposed at the boundary between the body member 20 and the cover member 22, on an inner peripheral face of the cylinder 12. The seal member 24 is an annular member having a U-shape in cross section, and is formed of a resin member 26 and an elastic member 28. The resin member 26 is an annular member having a U-shape in cross section, and includes a slidably contacting piece 26a that is positioned at a radially inner side and slidably contacts the piston 14, and a contacting piece 26b that is positioned at a radially outer side and contacts the cylinder 12. The elastic member 28 is disposed between the slidably contacting piece 26a and the contacting piece 26b. The elastic member 28 is an annular leaf spring having a U-shape in cross section, and is disposed such that the orientation of an opening portion 28a of the U-shape of the elastic member 28 is the same as the orientation of an opening portion of the U-shape of the resin member 26. The elastic member 28 disposed in the resin member 26 presses the slidably contacting piece 26a radially inward, and presses the contacting piece 26b radially outward.

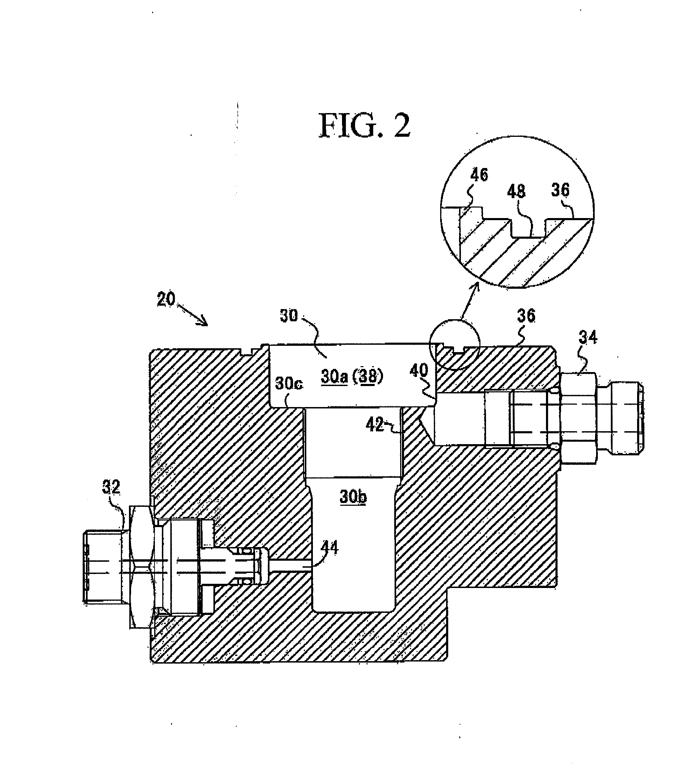

As shown in FIG 2, the body member 20 includes: a main body hole 30 which forms a part of the cylinder 12 and into which the valve unit 18 is fitted; a primary port 32 that is connected to the fuel tank via a pipe (not shown); and a secondary port 34 that is connected to the fuel cell stack via a pipe (not shown).

The main body hole 30 opens at a cover member placement face 36 that is an upper face of the body member 20. The main body hole 30 is divided into a cylinder-forming portion 30a that is located at an opening-side and that forms a portion of the cylinder 12, and a valve-accommodating portion 30b that is located further inward than the cylinder-forming portion 30a. The cylinder-forming portion 30a has a columnar shape, and mainly functions as a pressure reducing chamber 38 in which the pressure of the hydrogen gas is reduced. The cylinder-forming portion 30a communicates with the secondary port 34 via a discharge channel 40. The hydrogen gas, of which the pressure has been reduced in the pressure reducing chamber 38, is delivered to the fuel cell stack through the discharge channel 40 and the secondary port 34. The valve-accommodating portion 30b has a shape of a column with a diameter smaller than that of the cylinder-forming portion 30a. An internal thread 42 is formed in an inner peripheral face of the body member 20 that defines the valve-accommodating portion 30b. The valve-accommodating portion 30b is a space which communicates with the primary port 32 via an introduction channel 44, and into which the high-pressure (primary-pressure) hydrogen gas supplied from the fuel tank is introduced.

The body member 20 has: an annular spigot portion 46 (spigot protrusion portion) that is formed along the circumference of the opening of the cylinder-forming portion 30a; an annular groove 48 (second annular groove) that is larger in diameter than the spigot portion 46 and is formed on the radially outer side of the spigot portion 46; and a plurality of bolt holes (not shown). The spigot portion 46, the annular groove 48 and the bolt holes are formed in the cover member placement face 36. The spigot portion 46 is formed so as to protrude with respect to the other portion of the cover member placement face 36, and the annular groove 48 is formed so as to surround the spigot portion 46.

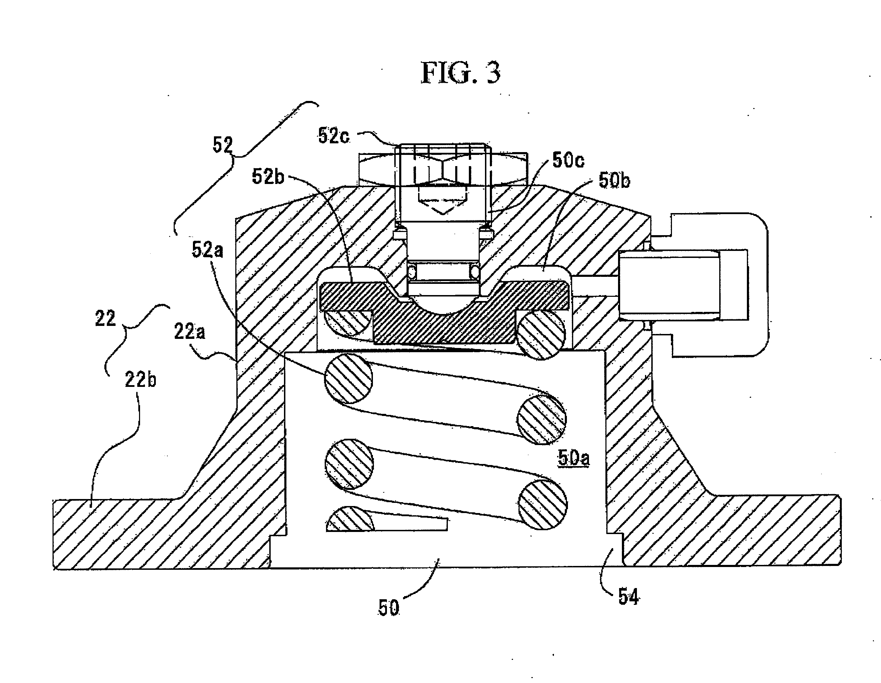

As shown in FIG. 3, the cover member 22 has: a cylindrical portion 22a in which a through-hole 50 extends in the axial direction of the cylindrical portion 22a; and a flange portion22b that is formed at a lower end of the cylindrical portion 22a and that protrudes radially outward. Inside the through-hole 50 of the cylindrical portion 22a, there is disposed the urging mechanism 52 that is formed of a piston spring (coil spring) 52a, a spring seat member 52b, and an adjustment screw 52c. The through-hole 50 is divided into a cylinder-formnng portion 50a that forms a portion of the cylinder 12, a spring seat housing portion 50b in which the spring seat member 52b is housed, and a threaded hole portion 50c into which the adjustment screw 52e is screwed, in this order from the flange 22b-side.

The piston spring 52a extends from the cylinder-forming portion 50a to the spring seat housing portion 50b of the through-hole 50, and an end portion of the piston spring 52a contacts the spring seat member 52b, and another end portion thereof contacts the piston 14. The spring seat member 52b is a disc-shaped member, is disposed in the spring seat housing portion 50b, and is clamped between the piston spring 52a and the adjustment screw 52c. In the urging mechanism 52, the force that is applied to the piston 14 by the piston spring 52a is adjusted by turning the adjustment screw 52c that is screwed into the threaded hole portion 50c and therefore changing the axial position of the spring seat member 52b in the through-hole 50.

A seal member placement portion 54 that is larger in diameter than the other portion of the cylinder-forming portion 50a is formed in the cylinder-forming portion 50a at an end on the Range portion 22b-side. The diameter of cylinder-forming portion 50a at the portion other than the seal member placement portion 54 is substantially equal to that of the cylinder-forming portion 30a of the body member 20. In addition, the diameter of the seal member placement portion 54 is substantially equal to the outside diameter of the spigot portion 46 of the body member 20. Bolt holes that correspond to the bolt holes of the body member 20 are formed at predetermined positions within the flange portion 22b of the cover member 22.

As shown in FIG 1, the piston 14 is a cylindrical member that has a bottom and a spring hole 56 in which the piston spring 52a that urges the piston 14 is housed. An outer peripheral face of the piston 14 is precision machined so as to have a predetermined face roughness. An annular groove 58 is formed in the outer peripheral face at a predetermined position near the opening-side end of the piston 14. An O-ring 60 (buffer member) that slidably contacts the inner peripheral face of the cylinder 12 is fitted into the annular groove 58 of the piston 14. The O-ring 60 is formed of an elastic member made of, for example, rubber so that the sliding resistance between the O-ring 60 and the inner peripheral face of the cylinder 12 is a predetermined value. More specifically, the sliding resistance between the O-ring 60 and the inner peripheral face of the cylinder 12 is desirably greater than the sliding resistance between the seal member 24 and the outer peripheral face of the piston 14. Thus, the O-ring 60 prevents rapid movement of the piston 14 in the cylinder 12, and damps excessive vibration of the piston 14. The piston 14 is placed into the cylinder-forming portion 50a of the cover member 22 such that the end portion of the piston 14, which defines the opening, faces the urging mechanism 52. When the piston 14 is thus placed, the piston spring 52a is housed within the spring hole of the piston 14.

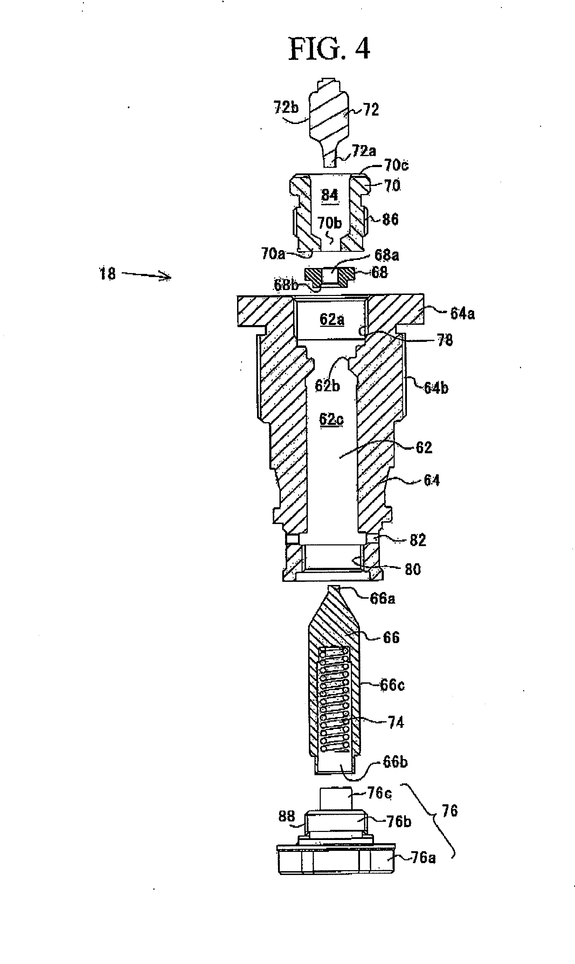

As shown in FIG 4, the valve unit 18 includes: a housing 64, a valve element 66, a valve seat member 68, a valve seat fixing member 70, a valve stem 72, a valve spring (coil spring) 74, and a lid member 76. A through-hole 62 extending in the axial direction is formed in the housing 64. The valve element 66 and the valve seat member 68 are used to open or close a flow channel. The valve seat fixing member 70 fixes the valve seat member 68 at a predetermined position within the housing 64. The valve stem 72 transmits the force of the piston 14 to the valve element 66. The valve spring 74 urges the valve element 66 toward the valve seat member 68. The lid member 76 closes a lower opening of the housing 64.

The housing 64 is a cylindrical member that has the through-hole 62. A flange portion 64a that protrudes radially outward is formed at an upper end of the housing 64. An external thread 64b is formed in an outer peripheral face of the housing 64. The through-hole 62 of the housing 64 constitutes a portion of the flow channel that is formed within the pressure reducing valve 10. The through-hole 62 is divided into a stem placement portion 62a, a reduced-diameter portion 62b and a valve element placement portion 62c in this order from the flange portion 64a. The stem placement portion 62a is a space in which the valve seat fixing member 70 and the valve stem 72 are disposed. An internal thread 78 is formed in an inner peripheral face of the housing 64 that defines the stem placement portion 62a. The reduced-diameter portion 62b is smaller in diameter than the stem placement portion 62a and the diameter of the valve element placement portion 62c. The valve seat member 68 is disposed in the reduced-diameter portion 62b at a position on the stem placement portion 62a-side. The valve element placement portion 62c is a space in which the valve element 66 and the valve spring 74 are disposed. An internal thread 80 is formed in an inner peripheral face of the housing 64 that defines the valve element placement portion 62c, at a portion near the lower opening. Further, multiple introduction holes 82 extending through the wall of the housing 64 open into the valve element placement portion 62c.

The valve seat member 68 is a disc-shaped resin member of which the outside diameter is larger than the diameter of the reduced-diameter portion 62b. A through-hole 68a is formed in a center portion of the valve seat member 68. A valve seat 68b is formed at an end of the through-hole 68a. The valve seat member 68 is disposed at a predetermined position within the housing 64, when the valve seat member 68 is placed into the through-hole 62 from the opening of the housing 64, which is on the stem placement portion 62a-side, in such a manner that the valve seat 68b faces the reduced-diameter portion 62b and then the valve seat member 68 is moved within the through-hole 62 until the valve seat member 68 contacts the inner peripheral face that defines the reduced-diameter portion 62b.

The valve seat fixing member 70 is a cylindrical member that has a bottom and a stem housing hole 84. A center portion of a bottom portion 70a of the valve seat fixing member 70 has a through-hole 70b. The outside diameter of the valve seat fixing member 70 is substantially the same as the diameter of the stem placement portion 62a of the housing 64. An outer peripheral face of the valve seat fixing member 70 has an external thread 86. Further, channel grooves 70c that extend radially from the stem housing hole 84 to an outer peripheral face of the valve seat fixing member 70 are formed in an opening-side end face of the valve seat fixing member 70. After the valve seat member 68 is disposed at a predetermined position in the housing 64, the valve seat foxing member 70 is placed into the stem placement portion 62a in such a manner that the bottom portion 70a faces the valve seat member 68, and is screwed to the housing 64. Thus, the valve seat member 68 is clamped between the valve seat fixing member 70 and the portion of the housing 64, which defines the reduced-diameter portion b2b, and is thus fixed at a predetermined position in the housing 64. Besides, when the valve seat member 68 is fixed in the housing 64, the through-hole 70b of the valve seat fixing member 70 communicates with the through-hole 68a of the valve seat member 68.

The valve stem 72 is a rod-shaped member having a tapered end portion 72a. The end portion 72a of the valve stem 72 has a columnar shape, and has a diameter smaller than the diameter of the through-hole 68a of the valve seat member 68. The valve stem 72 is placed into the stem housing hole 84 of the valve seat fixing member 70 in such a manner that the end portion 72a faces the bottom portion 70a of the valve seat fixing member 70. At this time, the end portion 72a of the valve stem 72 is placed into the through-hole 70b that is formed in the bottom portion 70a of the valve seat fixing member 70. In addition, in an outside face of the valve stem 72, sliding faces 72b and flow channel-forming faces (not shown) are alternately formed in the circumferential direction. The distance between each of the sliding faces 72 and the axis of the valve stem 72 is substantially equal to the inside radius of the valve seat fixing member 70. The distance between each of the flow channel-forming faces and the axis of the valve stem 72 is smaller than the inside radius of the valve seat fixing member 70. Therefore, spaces that form flow channels are formed between the channel-forming faces of the valve stem 72 placed in the stem housing hole 84 of the valve seat fixing member 70 and the inner peripheral face of the valve seat fixing member 70.

The valve element 66 is a rod-shaped member having a tapered end portion 66a. The end portion 66a of the valve element 66 has a columnar shape, and has a diameter smaller than the diameter of the through-hole 68a of the valve seat member 68. A spring hole 66b that extends in the axial direction is formed in an end portion of the valve element 66, which is opposite to the end portion 66a. The valve element 66 is placed into the housing 64 from the opening of the housing 64, which is on the valve element placement portion 62c-side, in such a manner that the end portion 66a faces the reduced-diameter portion 62b. At this time, the end portion 66a of the valve element 66 is placed into the through-hole 68a of the valve seat member 68, and contacts the end portion 72a of the valve stem 72. In an outside face of the valve element 66, sliding faces 66c and flow channel-forming faces (not shown) are alternately formed in the circumferential direction. The distance between each of the sliding faces 66c and the axis of the valve element 66 is substantially equal to the radius of the valve element placement portion 62c. The distance between each of the flow channel-forming faces and the axis of the valve element 66 is smaller than the radius of the valve element placement portion 62c. Therefore, spaces that form flow channels are formed between the channel-forming faces of the valve element 66 placed in the valve element placement portion 62c of the housing 64 and the inner peripheral face of the housing 64. Further the valve spring 74 is placed into the spring hole 66b of the valve element 66, and the opening of the housing 64, which is on the valve element placement portion 62c-side, is closed by the lid member 76.

The lid member 76 has a configuration in which three discs of different sizes, that is, a large-diameter portion 76a, a medium diameter portion 76b and a small-diameter portion 76c, are stacked in this order. The outside diameter of the medium diameter portion 76b of the lid member 76 is substantially the same as the diameter of the valve element placement portion 62c of the housing 64. An external thread 88 is formed in an outer peripheral face of the medium diameter portion 76b. The lid member 76 is attached to the housing 64 by screwing the external thread 88 of the medium diameter portion 76b to the internal thread 80 of the housing 64. At this time, the large-diameter portion 76a of the lid member 76 closes the opening of the housing 64, which is on the valve element placement portion 62c, and the small-diameter portion 76c of the lid member 76 supports the valve spring 74.

The valve unit 18 thus assembled is fitted to the body member 20, as shown in FIG. 1, by screwing the external thread 64b formed in the outer peripheral face of the housing 64 to the internal thread 42 formed in the inner peripheral face of the body member 20, which defines the valve-accommodating portion 30b. At this time, the axial position of the valve unit 18 relative to the body member 20 is fixed by the bringing the flange portion 64a of the housing 64 into contact with a bottom face 30c of the cylinder-forming portion 30a. The pressure reducing valve 10 according to the embodiment is formed by disposing an O-ring 92 (second seal member) into the annular groove 48 of the body member 20 in which the valve unit 18 is fitted, and then fitting the cover member 22, which is provided with the piston 14 and the seal member 24 disposed at the respective predetermined positions, to the body member 20.

When the cover member 22 is attached to the body member 20, the spigot portion 46 of the body member 20 is placed into the seal member placement portion 54 of the cover member 22, and the flange portion 22b of the cover member 22 is disposed on the cover member placement face 36 of the body member 20. At this time, the bolt holes formed in the flange portion 22b of the cover member 22 are aligned coaxially with the bolt holes of the body member 20, and bolts 90 are inserted into the bolt holes of the cover member 22 and the bolt holes of the body member 20. In this manner, the cover member 22 and the body member 20 are fastened together. Thus, the cylinder-forming portion 30a of the body member 20 and the cylinder-forming portion 50a of the cover member 22 are aligned coaxially with each other to form the cylinder 12 in which the piston 14 is housed.

ln the pressure reducing valve 10 according to the embodiment, the spigot portion 46 of the body member 20 is placed into the seal member placement portion 54 of the cover member 22, whereby an annular groove 94 (first annular groove) in which the seal member 24 is disposed is formed. The annular groove 94 is formed in the inner peripheral face of the cylinder 12, at the boundary between the cover member 22 and the body member 20. The seal member 24 is disposed in the annular groove 94 in such a manner that the opening portion 28a of the U-shape of the elastic member 28 faces the spigot portion 46 (faces the pressure reducing chamber 38). At this time, the slidably contacting piece 26a of the seal member 24 is brought into slidable contact with the outer peripheral face of the piston 14 by the pressing force of the elastic member 28.

When the cover member 22 is attached to the body member 20, the internal space of the cylinder 12 is divided into two spaces, that is, a body member 20-side space and a cover member 22-side space, by the piston 14. The body member 20-side space serves mainly as the pressure reducing chamber 38 in which the pressure of the hydrogen gas is reduced, and the cover member 22-side space serves as a pressure regulation chamber 96 in which the urging mechanism 52 is disposed. In addition, the valve stem 72 that constitutes the valve unit 18 is clamped between the piston 14 that is urged toward the pressure reducing chamber 38 by the piston spring 52a, and the valve clement 66 that is urged toward the valve seat member 68b by the valve spring 74. Thus, the valve stem 72 is housed in the stem housing hole 84 of the valve seat fixing member 70. Thus, the pressing force of the piston spring 52a is applied to the piston 14 in the cylinder 12 in the direction from the pressure regulation chamber 96 toward the pressure reducing chamber 38, and the pressing force of the valve spring 74 and the pressure of the hydrogen gas introduced into the pressure reducing chamber 38 are applied to the piston 14 in the direction from the pressure reducing chamber 38 toward the pressure regulation chamber 96. In this embodiment, the piston spring 52a has a larger spring constant than that of the valve spring 74.

Therefore, when the sum of the pressing force of the valve spring 74 and the force of the pressure of the hydrogen gas introduced in the pressure reducing chamber 38 is smaller than the pressing force of the piston spring 52a, the piston 14 is moved toward the pressure reducing chamber 38. As the piston 14 moves toward the pressure reducing chamber 38, the valve stem 72 and the valve element 66 are pushed by the piston 14 to move in the same direction as the direction of movement of the piston 14 (i.e., in a downward direction in FIG 1). Thus, the valve element 66 moves away from the valve seat member 68b, that is, an open state is achieved.

On the other hand, when the sum of the pressing force of the valve spring 74 and the force of the pressure of the hydrogen gas introduced in the pressure reducing chamber 38 becomes larger than the pressing force of the piston spring 52a, the piston 14 is moved toward the pressure regulation chamber 96. As the piston 14 moves toward the pressure regulation chamber 96, the valve element 66 and the valve stem 72 are pushed by the valve spring 74 to move in the same direction as the direction of movement of the piston 14 (i.e., in an upward direction in FIG 1). Thus, the valve element 66 contacts the valve seat 68b, that is, a closed state is achieved.

In the pressure reducing valve 10 formed as described above, the primary port 32 is connected with a pipe that communicates with the fuel tank, and the second port 34 is connected with a pipe that communicates with the fuel cell stack. The high-pressure hydrogen gas supplied from the fuel tank to the pressure reducing valve 10 flows through the primary port 32 and the introduction channel 44, and is introduced into the valve-accommodating portion 30b of the body member 20. The hydrogen gas introduced in the valve-accommodating portion 30b is then introduced into the housing 64 of the valve unit 18 through the introduction holes 82 of the housing 64. The hydrogen gas introduced in the housing 64 then flows through the flow channels formed between the inner peripheral face of the housing 64 and the valve element 66, the through-hole 68a of the valve seat member 68, the flow channels formed between the inner peripheral face of the valve seat fixing member 70 and the valve stem 72, and the channel grooves 70c of the valve seat fixing member 70, in this order, and then is introduced into the pressure reducing chamber 38. The hydrogen gas introduced in the pressure reducing chamber 38 is delivered to the fuel cell stack through the discharge channel 40 and the secondary port 34.

In the pressure reducing valve 10, when the pressure in the pressure reducing chamber 38 increases to a predetermined pressure due to the high-pressure hydrogen gas supplied from the fuel tank, the piston 14 is moved toward the pressure regulation chamber 96, placing the valve element 66 in the closed state. Thus, the introduction of the hydrogen gas into the pressure reducing chamber 38 stops, so that the pressure in the pressure reducing chamber 38 decreases as the hydrogen gas is discharged through the discharge channel 40. When the pressure in the pressure reducing chamber 38 decreases to a certain level, the piston 14 is moved again toward the pressure reducing chamber 38, placing the valve element 66 in the open state. Thus, the high-pressure hydrogen gas is introduced into the pressure reducing chamber 38, so that the pressure in the pressure reducing chamber 38 increases again. By repeating this action, the pressure reducing valve 10 according to the embodiment reduces the pressure of the hydrogen gas that has a high pressure and that is supplied from the fuel tank to a predetermined pressure, and supplies the hydrogen gas having a reduced pressure to the fuel cell stack.

With the pressure reducing valve 10 according to the embodiment, the following advantageous effects can be obtained. In the pressure reducing valve 10, the seal member 24 (first seal member) is disposed in the annular groove 94 (first annular groove) that is formed at the boundary between the body member 20 and the cover member 22. Therefore, in the pressure reducing valve 10 according to the embodiment, even if the elastic member 28 of the seal member 24 has a low elasticity, there is no need to provide the piston 14 with a fixture nut for fixing the seal member 24, and thus the shape of the piston 14 is not complicated.

As for an existing pressure reducing valve, it is necessary to perform a process of fastening a fixture nut, used to attach the seal member 24 to an outer peripheral face of the piston, to the piston. In the pressure reducing valve 10 according to the foregoing embodiment of the invention, on the other hand, the seal member 24 can be mounted just by disposing the seal member 24 in the seal member placement portion 54 (annular groove 94), and then connecting the body member 20 and the cover member 22 together. Therefore, the pressure reducing valve 10 does not require any particular process step for the mounting of the seal member 24, and thus can be easily assembled.

In addition, in the existing pressure reducing valve in which the seal member 24 is disposed on the outer peripheral face of the piston, it is necessary to perform the precision-machining on the inner peripheral face of the cylinder to achieve a predetermined face roughness so that the inner peripheral face of the cylinder and the slidably contacting piece 26a of the seal member 24 slide smoothly with respect to each other. In the pressure reducing valve 10 according to the foregoing embodiment, on the other hand, because the slidably contacting piece 24a of the seal member 24 slidably contacts the outer peripheral face of the piston 14, the face that needs to be precision-machined is the outer peripheral face of the piston 14, which is more easily machined than the inner peripheral face of the cylinder 12. Therefore, in the pressure reducing valve 10, it is possible to easily perform the precision-machining for securing a sliding performance of the seal member 24.

In the pressure reducing valve 10 according to the embodiment, the position of the cover member 22 relative to the body member 20 can be easily determined by placing the spigot portion 46 (spigot protrusion portion) of the body member 20 into the seal member placement portion 54 of the cover member 22.

In addition, in the pressure reducing valve 10, because the opening portion 28a of the U-shape of the seal member 24 is oriented toward the spigot portion 46, the hydrogen gas that enters from the pressure reducing chamber 38 into a space between the inner peripheral face of the cylinder 12 and the outer peripheral face of the piston 14 can be introduced into the opening 28a of the elastic member 28 that forms the seal member 24. The pressure of the hydrogen gas introduced from the opening portion 28a of the seal member 24 presses the slidably contacting piece 24a of the seal member 24 toward the piston 14. As a result, in the pressure reducing valve 10 according to the embodiment, the force with which the slidably contacting piece 24a of the seal member 24 presses the piston 14 increases, so that the air-tightness achieved by the seal member 24 can be improved.

In the pressure reducing valve 10, the hermetical sealing between the cover member 22 and the body member 20 is secured by forming the annular groove 48 (second annular groove) that surrounds the annular groove 94 (first annular groove) at the boundary between the cover member 22 and the body member 20, and then disposing the O-ring 92 (second seal member) in the annular groove 48. With this arrangement, the pressure reducing valve 10 according to the embodiment is able to effectively prevent the hydrogen gas from flowing outside through the boundary between the body member 20 and the cover member 22 via the annular groove 94.

In the pressure reducing valve 10, the piston 14 is provided with the O-ring 60 (buffer member) that is disposed at a position closer to the pressure regulation chamber 96 than the seal member 24 in the radial direction, and that slidably contacts the inner peripheral face of the cylinder 12 at an elastic force that is smaller than the pressing force with which the slidably contacting piece 24a of the seal member 24 slidably is brought into contact with the outer peripheral face of the piston 14. Therefore, in the pressure reducing valve 10 according to the embodiment, excessive energy that causes excessive movement of the piston 14 can be absorbed by the O-ring 60 so as to prevent rapid movement of the piston 14 within the cylinder 12 and effectively damp excessive vibration of the piston 14.

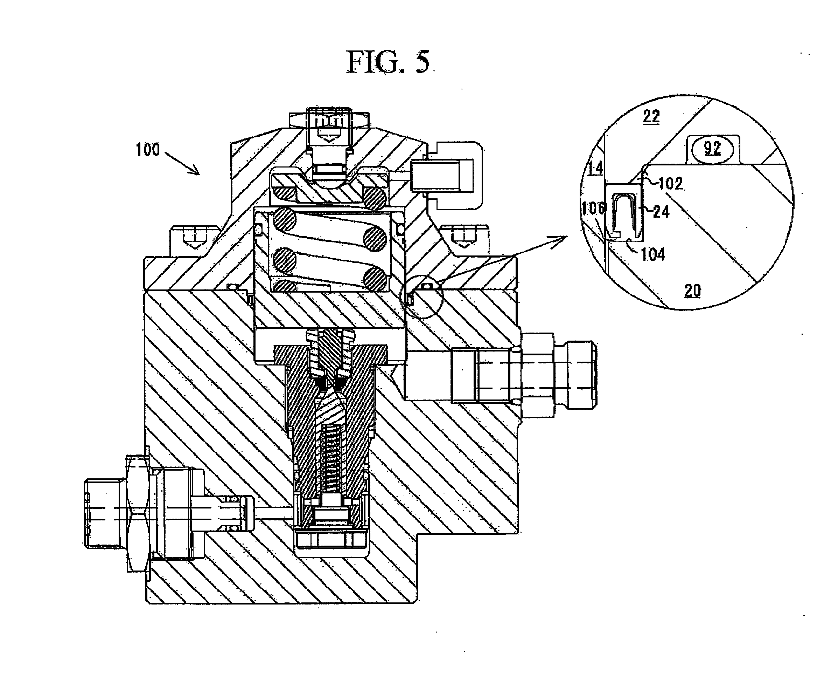

The foregoing embodiment may be modified as follows. In the pressure reducing valve 10 according to the foregoing embodiment, the body member 20 has the spigot portion 46, and the cover member 22 has the seal member placement portion 54, and the spigot portion 46 is placed into the seal member placement portion 54, whereby the annular groove 94 is formed in the inner peripheral face of the cylinder 12. However, the invention is not limited to this construction. For example, as in a pressure reducing valve 100 shown in FIG 5, a spigot portion 102 may be formed in the cover member 22, and a seal member placement portion 104 may be formed in the body member 20 so that an annular groove 106 (first annular groove) is formed in the body member 20.

In the pressure reducing valve 10 according to the foregoing embodiment, the annular groove 48 (second annular groove) is formed in the body member 20. Alternatively, the annular groove 48 may be formed in the cover member 22, as in the pressure reducing valve 100 shown in FIG 5.
A pressure reducing valve (10) includes; a valve unit (18) provided between a primary port (32) and a secondary port (34); a cylinder (12) provided downstream of the valve unit (18); a piston (14) that divides a space in the cylinder (12) into a pressure reducing chamber (38) and a pressure regulation chamber (96) and that opens or closes the valve unit 18 by sliding within the cylinder (12); and a seal member (24) that is disposed in an inner peripheral face of the cylinder (12) and that includes a slidably contacting piece (26a) that slidably contacts the piston (14) due to the pressing force of an elastic member (28). The cylinder (12) is formed of a body member (20) that defines the pressure reducing chamber (38) and a cover member (22) that defines the pressure regulation chamber (96). An annular groove (94) in which the first seal member (24) is disposed is formed at the boundary between the body member (20) and the cover member (22).

## Claims

1. A pressure reducing valve comprising:
an open-close valve provided between a primary port and a secondary port;
a cylinder provided downstream of the open-close valve;
a piston that is provided in the cylinder, that partitions a space in the cylinder into a pressure reducing chamber and a pressure regulation chamber, and that opens or closes the open-close valve by sliding within the cylinder in accordance with a difference between a force that is applied to the piston from a pressure regulation chamber side and a force that is applied to the piston from a pressure reducing chamber side; and
an annular first seal member that is disposed in an inner peripheral face of the cylinder and that includes a slidably contacting piece that slidably contacts an outer peripheral face of the piston due to a pressing force of an elastic member,
wherein the cylinder is formed by connecting a body member that defines the pressure reducing chamber and a cover member that defines the pressure regulation chamber to each other, and
wherein a first annular groove in which the first seal member is disposed is formed at a boundary between the body member and the cover member.

2. The pressure reducing valve according to claim 1, further comprising:
a seal member placement portion which is formed at an opening end of the cover member that defines the pressure regulation chamber, which is larger in diameter than the pressure regulation chamber, and in which the first seal member is disposed; and
a spigot protrusion portion which is formed along a circumference of an opening of the body member that defines the pressure reducing chamber, and of which an outer peripheral face contacts an inner peripheral face of the cover member which defines the seal member placement portion,
wherein the first annular groove is formed by placing the spigot protrusion portion into the seal member placement portion.

3. The pressure reducing valve according to claim 2,
wherein the first seal member is an annular member having a U-shape in cross section, and is disposed in the first annular groove such that an opening portion of the U-shape is oriented toward the spigot protrusion portion,
wherein a second annular groove that surrounds the first annular groove is formed at the boundary between the cover member and the body member, and
wherein a second seal member that provides hermetical sealing between the body member and the cover member is disposed in the second annular groove.

4. The pressure reducing valve according to any one of claims 1 to 3, further comprising
a buffer member that is disposed at a position closer to the pressure regulation chamber than the first seal member, and that slidably contacts the inner peripheral face of the cylinder with an elastic force that is smaller than a pressing force with which the slidably contacting piece slidably contacts the outer peripheral face of the piston.
